(19) Europäisches Patentamt
European Patent Office
Office européen des brevets

(11) Veröffentlichungsnummer: **0 015 503**
**B1**

(12) **EUROPÄISCHE PATENTSCHRIFT**

(45) Veröffentlichungstag der Patentschrift: **06.10.82**

(51) Int. Cl.³: **C 07 F 9/65,** C 07 D 239/36 // A01N57/16

(21) Anmeldenummer: **80100987.9**

(22) Anmeldetag: **28.02.80**

(54) **Verfahren zur Herstellung von Diazinon.**

(30) Priorität: **28.02.79 DE 2907773**

(43) Veröffentlichungstag der Anmeldung: **17.09.80 Patentblatt 80/19**

(45) Bekanntmachung des Hinweises auf die Patenterteilung: **06.10.82 Patentblatt 82/40**

(84) Benannte Vertragsstaaten: **CH DE FR GB IT**

(56) Entgegenhaltungen:
**CH-A-496 871**
**FR-A-1 473 812**
**FR-A-2 069 567**
**FR-A-2 223 380**
**GB-A-2 011 415**
**US-A-4 066 642**
**CHEMICAL ABSTRACT, Band 71, Nr. 15, 13. Oktober 1969, Seite 318, Nr. 70563a Columbus, Ohio, U.S.A. T. KATO et al.: »Ketene and its derivatives. XXVII. Acylation and ring-closure of Beta-aminocrotonamide«**

(73) Patentinhaber: **Consortium für elektrochemische Industrie GmbH, Zielstattstrasse 20, D-8000 München 70 (DE)**

(72) Erfinder: **Schilling, Bernd, Dr. Dipl.-Chem., Willibaldstrasse 12 b, D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 015 503 B1**

BUNDESDRUCKEREI BERLIN

Verfahren zur Herstellung von Diazinon

Gegenstand der Erfindung ist ein verbessertes Herstellungsverfahren für das in der Schädlingsbekämpfung wegen seiner guten insektiziden und akariziden Eigenschaften und wegen seiner geringen Warmblütertoxizität weitverbreitete Diazinon.

Erstmals wurde Diazinon bereits 1952 von Glysin und Margot durch Umsetzung von 2-Isopropyl-4-methyl-6-hydroxy-pyrimidin mit Diäthylthiophosphorylchlorid in einem inerten Lösungsmittel in Gegenwart von Kaliumkarbonat dargestellt:

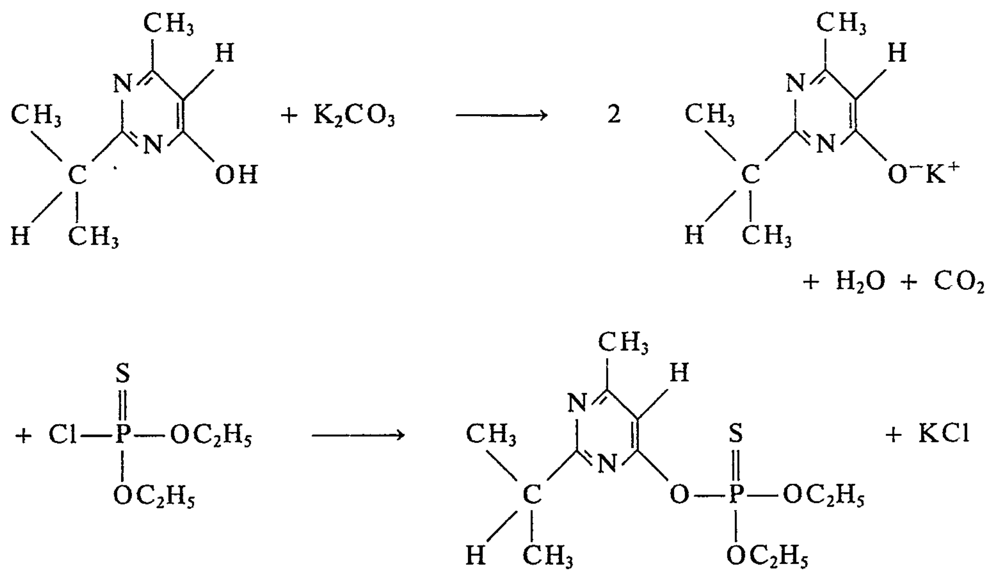


Dabei wird zunächst aus 2-Isopropyl-4-Methyl-6-Hydroxy-Pyrimidin das Kaliumpyrimidinolat durch Erhitzen mit Kaliumkarbonat, beispielsweise in Benzol, unter gleichzeitiger Entfernung des gebildeten Wassers hergestellt. Das auf diese Weise als fein verteilte Suspension anfallende Kaliumsalz wird anschließend durch mehrstündiges Erhitzen mit Diäthylthiophosphorylchlorid umgesetzt. Nach Beendigung der Reaktion wird entstandenes Kaliumchlorid mit Wasser ausgewaschen und das Lösungsmittel unter vermindertem Druck abgezogen (GB-PS 713 278). Das Standardverfahren zur technischen Herstellung erfolgt im wesentlichen über eine 4-Stufen-Synthese gemäß folgendem Reaktionsschema:

1. Imidoäther-Stufe:

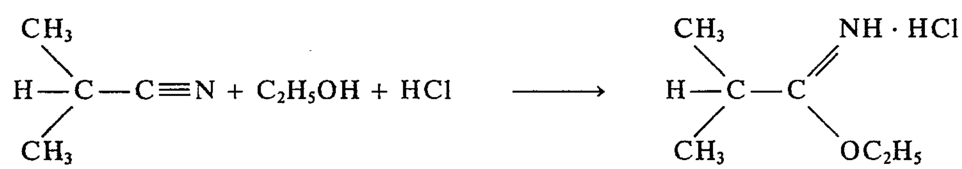


2. Amidin-Stufe:

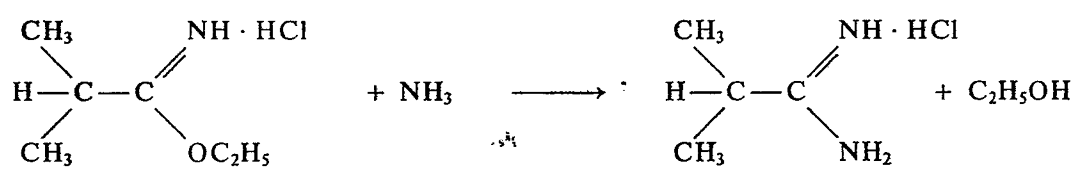

3. Ringschluß:

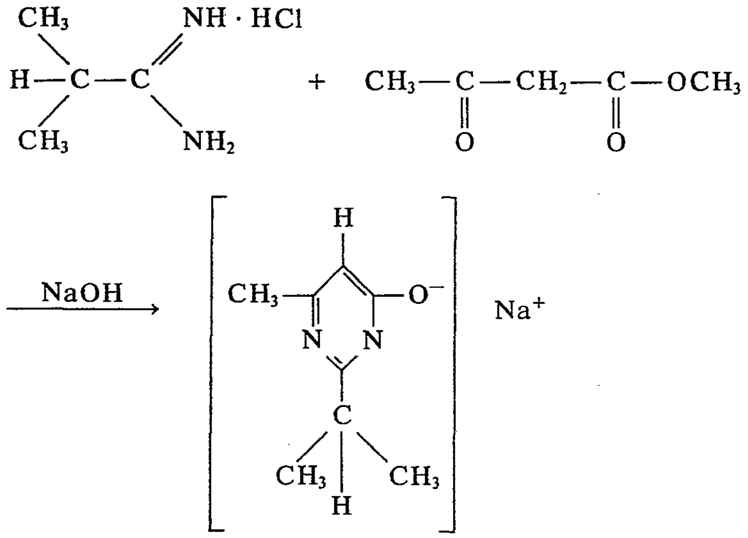


4. Neutralisationsschritt:

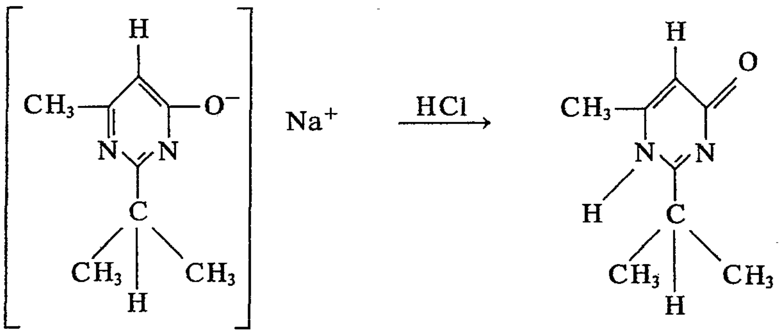


Zwischenzeitlich wurden zwar eine Reihe einfacher erscheinender Verfahren in der Patentliteratur beschrieben (vgl. hierzu US-PS 4 052 397), die aber offensichtlich bislang noch nicht im technischen Maßstab ausgeführt wurden. So werden auch in Chemical Abstracts, Band 71, Nr. 15, Seite 318, Nr. 70563a, Laborversuche zur Acylierung von $\beta$-Aminocrotonamid mit nachfolgender Ringschlußbildung durch Temperatureinwirkung oder Natriumethylat bzw. Natronlauge beschrieben.

Aus FR-A-2 069 567 ist die Herstellung von in 2-Stellung substituierten 6-methyl-4-pyrimidonen durch Umsetzung von $\beta$-aminocrotonamid mit Estern organischer Säuren in Gegenwart eines Alkalimetalls oder entsprechenden Alkoholats und nachfolgender Neutralisation mit Salzsäure bekannt. Die Reaktion führt aber nicht direkt zum Diazinon.

Zum eigentlichen Diazinon-Verfahren, wie es eingangs zitiert wird, sind in der Zwischenzeit noch eine Reihe von ergänzenden Patentschriften erschienen, die sich in erster Linie mit geeigneten Katalysatorsystemen zur Verkürzung der langen Reaktionszeiten des Stammverfahrens befassen. Als geeignet erscheinen gemäß US-PS 3 107 245 beispielsweise Quecksilbersalze, gemäß der US-PS 3 107 246 Kupferchlorid, gemäß der US-PS 3 367 935 schließlich Kupfernitrat und entsprechend der Jap. Patentschrift 7 524 958 basisches Kupferoxid.

Der vorliegenden Erfindung lag die Aufgabe zugrunde, ein gegenüber den bekannten Verfahren einfacheres Herstellungsverfahren anzugeben, nach welchem die Synthese von Diazinon — ausgehend von leicht verfügbaren Ausgangsmaterialien — in einem Zug ohne die aufwendige Isolierung von Zwischenprodukten erfolgen kann.

Gelöst wird diese Aufgabe durch ein Verfahren, welches dadurch gekennzeichnet ist, daß $\beta$-Isobutyrylaminocrotonsäureamid mit der 1- bis 1,2fachen molaren Menge einer Substanz der allgemeinen Formel NaOR, mit R gleich Wasserstoff oder einer Alkylgruppe mit 1 bis 8 Kohlenstoffatomen in einer oberhalb 90°C siedenden Flüssigkeit, bestehend aus Wasser und/oder einem Alkohol mit 1 bis 8 Kohlenstoffatomen unterhalb dem Siedepunkt dieser Flüssigkeit, aber oberhalb 90°C cyclisiert wird und das entstehende Natriumpyrimidinolat mit einem inerten, unpolaren Lösungsmittel, dessen Siedepunkt über dem der eingesetzten Flüssigkeit liegt, ausgefällt wird und die nach weitgehender destillativer Einengung vorliegende feinkristalline Suspension direkt mit Diethylthiophosphorylchlorid bei einer Temperatur von 100 bis 130°C zu Diazinon umgesetzt wird.

Das in der Reaktion eingesetzte $\beta$-Isobutyrylaminocrotonsäureamid ist in der Fachliteratur

ausführlich beschrieben und läßt sich beispielsweise durch Umsetzung des aus Diketen und Ammoniak leicht zugänglichen β-Aminocrotonsäureamids (vgl. DE-OS 2 037 888) mit Dimethylketen (vgl. DE-OS 2 852 887) oder Isobuttersäureanhydrid (vgl. DE-OS 2 065 698) zum β-Isobutyrylaminocrotonsäureamid acylieren.

Als Substanz der allgemeinen Formel NaOR läßt sich anspruchsgemäß Natriummethylat, -äthylat, -propylat, -butylat, -pentylat, -hexylat, -heptylat, -octylat oder vorzugsweise Natronlauge einsetzen, wobei die Zyklisierung in der etwa 3- bis 8fachen Gewichtsmenge — bezogen auf die Ausgangsstoffe — eines Gemisches aus 0 bis 100 Gew.-% Wasser und einem Alkohol mit 1 bis 8 Kohlenstoffatomen erfolgt. Die Obergrenze der Alkohol-/Wassermenge ist aus Zweckmäßigkeitsgründen angegeben, da höhere Gewichtsmengen die Reaktion zwar nicht unterbinden, aber auch zu keinem erkennbaren Vorteil führen und somit nur unnötige Kosten bedingen. Die eingesetzten Alkohol-/Wassergemische sollen Siedepunkte oberhalb 90°C aufweisen, da die Zyklisierung bei — oder über — dieser Temperatur durchgeführt wird, d. h., Zyklisierungstemperatur und Siedetemperatur der eingesetzten Alkohol-/Wassergemische müssen aufeinander abgestimmt werden. Gemäß der bevorzugten Ausführungsform wird die Umsetzung von β-Isobutyrylaminocrotonsäureamid mit Natronlauge in reinem Isobutanol durchgeführt, da sich dieses destillativ leicht entfernen läßt. Aber auch mit Natronlauge in Wasser oder beispielsweise Natronlauge oder Isobutanolat in Isobutanol lassen sich Ausbeuten von nahezu 100% realisieren.

Die Zyklisierung ist in der Regel nach einem Zeitraum von etwa 1 bis 3 Stunden abgeschlossen, wobei höhere Temperaturen zu entsprechend kürzeren Zeiten führen.

Zur Überführung des Natriumsalzes in eine für die Phosphorylierung geeignete Suspension wird zunächst ein Teil des Alkohol-/Wassergemisches — zweckmäßig etwa 60 bis 80 Gew.-% — abdestilliert und ein gegenüber eingesetztem Alkoholat inertes, unpolares Lösungsmittel, dessen Siedepunkt über dem des eingesetzten Alkohols liegt, wie beispielsweise Cyclohexan, Ligroin, Toluol oder vorzugsweise Xylol, zugesetzt.

Das restliche Wasser bzw. der restliche Alkohol wird bei Normaldruck zumindest weitgehend fraktioniert abdestilliert. Beispielsweise koordinativ an das Salz gebundenes Wasser und Isobutanol werden bei den hierzu erforderlichen Temperaturen von 120 bis 130°C entfernt.

Anschließend wird ohne Isolierung das ausgefällte Natriumpyrimidinolat direkt durch rasches Zugeben von Diäthylthiophosphorylchlorid bei einer Temperatur von 100 bis 130°C, vorzugsweise 115 bis 120°C zu Diazinon umgesetzt. Abhängig von der gewählten Temperatur ist die Reaktion nach vergleichsweise kurzer Zeit — bei 120°C in etwa 1 Stunde — beendet. Die Aufarbeitung gelingt anschließend in der üblichen Weise durch Auswaschen mit Wasser und Abdestillation des Lösungsmittels im Vakuum nach vorheriger Abtrennung des Wassers.

Beispiel

170 g (1 Mol) β-Isobutyrylaminocrotonsäureamid und 40 g (1 Mol) Natriumhydroxid wurden in 1000 ml Isobutanol auf 100°C erhitzt. Danach wurden ca. 600 ml Isobutanol/Reaktionswasser bei Normaldruck abdestilliert. Nach Zugabe von 1200 ml Xylol wurde das restliche Isobutanol herausfraktioniert. Dem als voluminöse, feinkristalline Suspension anfallenden Natriumsalz wurden anschließend 188,5 g (1 Mol) Diäthylthiophosphorylchlorid rasch (3 min) unter Rühren bei 120°C zugetropft. Durch entsprechende Kühlung wurde die Temperatur etwa 30 min aufrechterhalten und dann auf 110°C abgesenkt. Nach weiteren 30 min wurde schließlich auf Raumtemperatur (25°C) abgekühlt.

Das Reaktionsgemisch wurde anschließend zuerst mit 400 ml 0,1 n Salzsäure und nachfolgend mit 400 ml 0,1 n Natronlauge gewaschen. Nach Abtrennung der Waschwässer wurde das Xylol im Vakuum abdestilliert. Zur vollständigen Entfernung der flüchtigen Anteile wurde abschließend das Diazinon im Hochvakuum (ca. 1 mbar) bei 60°C andestilliert. Als Ausbeute wurden 280 g ≙ 92,1% der Theorie an O,O-Diäthyl-O-(2-Isopropyl-4-Methyl-6-Pyrimidyl)-Thionophosphat erhalten.

**Patentansprüche**

1. Verfahren zur Herstellung von Diazinon, dadurch gekennzeichnet, daß β-Isobutyrylaminocrotonsäureamid mit der 1- bis 1,2fachen molaren Menge einer Substanz der allgemeinen Formel NaOR, mit R gleich Wasserstoff oder einer Alkylgruppe mit 1 bis 8 Kohlenstoffatomen in einer oberhalb 90°C siedenden Flüssigkeit, bestehend aus Wasser und/oder einem Alkohol mit 1 bis 8 Kohlenstoffatomen unterhalb dem Siedepunkt dieser Flüssigkeit, aber oberhalb 90°C cyclisiert wird und das entstehende Natriumpyrimidinolat mit einem inerten, unpolaren Lösungsmittel, dessen Siedepunkt über dem der eingesetzten Flüssigkeit liegt, ausgefällt wird und die nach weitgehender destillativer Einengung vorliegende feinkristalline Suspension direkt mit Diethylthiophosphorylchlorid bei einer Temperatur von 100 bis 130°C umgesetzt wird.

2. Verfahren nach Anspruch 1, dadurch gekennzeichnet, daß als Substanz der allgemeinen Formel NaOR Natronlauge eingesetzt wird.

3. Verfahren nach Anspruch 1 und 2, dadurch gekennzeichnet, daß die Umsetzung von β-Isobutyrylaminocrotonsäureamid mit Natronlauge in Isobutanol erfolgt.

4. Verfahren nach Anspruch 1 bis 3, dadurch gekennzeichnet, daß das Natriumpyrimidinolat mit Xylol ausgefällt wird.

**Claims**

1. Process for the manufacture of diazinone, characterized in that β-isobutyrylaminocrotonic acid amide is cyclized with 1 to 1.2 times the molar amount of a substance of the general formula NaOR, in which R represents hydrogen or an alkyl group having 1 to 8 carbon atoms, in a liquid having a boiling point above 90°C consisting of water and/or an alcohol having 1 to 8 carbon atoms, above 90°C but below the boiling point of said liquid, and the resulting sodium pyrimidinolate is precipitated by an inert non-polar solvent that has a boiling point above that of the liquid used, and the finely crystalline suspension which is present after an extensive distillative concentration is reacted directyl with diethylthiophosphoryl chloride at a temperature of 100 to 130°C.

2. Process according to claim 1, characterizes in that sodium hydroxide solution is used as the substance of the general formula NaOR.

3. Process according to claims 1 and 2, characterized in that the reaction of β-isobutyrylaminocrotonic acid amide with sodium hydroxide solution is carried out in isobutanol.

4. Process according to claims 1 to 3, characterized in that the sodium pyrimidinolate is precipitated by xylene.

**Revendications**

1. Procédé de préparation du diazinon, caractérisé en ce qu'on cyclise le β-isobutyrylamino-crotonamide avec de 1 à 1,2 fois la quantité molaire d'un composé répondant à la formule NaOR dans laquelle R représente l'hydrogène ou un radical alkyle contenant de 1 à 8 atomes de carbone, dans un liquide bouillant au-dessus de 90°C et constidué d'eau et/ou d'un alcool contenant de 1 à 8 atomes de carbone, à une température inférieure au point d'ébullition de ce liquide mais supérieure à 90°C, on fait précipiter le pyrimidinolate de sodium qui se forme avec un solvant inerte non polaire dont le point d'ébullition est supérieur à celui du liquide mis en jeu et on fait réagir la suspension de fins cristaux, obtenue après concentration poussée par distillation, directement avec le phosphorochloridothioate de diéthyle à une température de 100 à 130°C.

2. Procédé selon la revendication 1, caractérisé en ce qu'on utilise l'hydroxyde de sodium sous la forme d'une solution comme composé de formule NaOR.

3. Procédé selon l'une des revendications 1 et 2, caractérisé en ce qu'on fait réagir le β-isobutyrylamino-crotonamide avec une solution d'hydroxyde de sodium dans de l'isobutanol.

4. Procédé selon l'une quelconque des revendications 1 à 3, caractérisé en ce qu'on fait précipiter le pyrimidinolate de sodium par du xylène.